# DEMANDE DE BREVET EUROPEEN

(11) **EP 1 536 154 A2**
(43) Date de publication de la demande: **01.06.2005**
(21) Numéro de dépôt: 04300806.9
(22) Date de dépôt: 22.11.2004
(51) Int. Cl.: F16D 3/04

(54) **Dispositif d'accouplement de deux arbres en rotation**

(30) Priorité: 28.11.2003 FR 0350930
(71) Demandeur: Renault s.a.s., 92100 Boulogne Billancourt (FR)
(72) Inventeur: Bossavie, Vincent, 92310 Sevres (FR); Mallet, Philippe, 78810 Feucherolles (FR); Frigo, Marc, 91310 Linas (FR)

(57) **Abrégé**

Dispositif d'accouplement de deux arbres en rotation comportant un arbre menant (1) muni à l'une de ses extrémités d'une cloche (3) définissant une cavité circulaire (7), un moyen amenant l'huile sous pression de l'intérieur de l'arbre menant vers l'intérieur de la cloche, un arbre mené (13), et des moyens d'entraînement comportant un joint homocinétique (15) disposé dans la cavité circulaire (7) de la cloche (3), le dispositif d'accouplement comportant également un capotage (27) coiffant la cloche (3) sur sa périphérie et sa face côté arbre mené (13), et définissant un orifice (29) de passage de l'arbre mené.

## Description

La présente invention concerne un dispositif d'accouplement de deux arbres en rotation, et en particulier un dispositif d'accouplement entre un arbre à cames et un arbre de pompe à injection en rotation pour moteur à combustion interne de véhicule automobile.

Il est connu d'utiliser des dispositifs d'accouplement de deux arbres en rotation pour les moteurs à combustion interne, notamment pour accoupler un arbre à cames avec une pompe d'injection. Ces dispositifs comportent un joint de liaison de type homocinétique, connu sous le nom de joint oldham. La particularité de ce joint est qu'il se déplace par l'intermédiaire de deux guidages perpendiculaires entre eux, ce qui permet de compenser les défauts de coaxialité des arbres. La présence de mouvements peut provoquer une usure, un échauffement, voire même un grippage des surfaces en contact. Une solution est d'utiliser un système de lubrification. Un tel système est connu par exemple dans le brevet JP-2001263025, dans lequel on utilise l'huile sous pression provenant de l'arbre à cames. Cependant, ce dispositif d'accouplement ne donne pas entière satisfaction, car d'une part les fuites d'huile sont nombreuses, et car d'autre part il se produit un phénomène de centrifugation de l'huile sous l'effet de la rotation de l'accouplement.

Un des objets de l'invention est de fournir un dispositif d'accouplement qui pallie les inconvénients de l'état de la technique.

L'invention a pour but de fournir un dispositif d'accouplement de deux arbres en rotation comportant un arbre menant muni à l'une de ses extrémités d'une cloche définissant une cavité circulaire, un moyen amenant l'huile sous pression de l'intérieur de l'arbre menant vers l'intérieur de la cloche, un arbre mené, et des moyens d'entraînement comportant un joint homocinétique disposé dans la cavité circulaire de la cloche, et comportant un capotage coiffant la cloche sur sa périphérie et sa face côté arbre mené, et définissant un orifice de passage de l'arbre mené.

Selon d'autres caractéristiques de l'invention :
- Il peut exister un jeu entre l'extrémité de l'arbre mené et l'orifice du capotage, le jeu étant déterminé de façon à autoriser les fuites.
- L'arbre menant peut être un arbre à cames.
- L'arbre mené peut être un arbre de pompe d'injection.
- Le dispositif peut comporter une vis de fixation de la cloche sur l'arbre menant qui peut être percée.
- Le moyen d'amené de l'huile sous pression de l'intérieur de l'arbre menant vers la cavité circulaire de la cloche peut consister en un perçage dans l'arbre menant communiquant avec un perçage dans la cloche.

La présente invention et ses avantages seront mieux compris à la lecture de la description détaillée d'un mode de réalisation pris à titre d'exemple et nullement limitatif, et illustré par les dessins annexés sur lesquels :
- La figure 1 est une vue en coupe de l'assemblage selon l'invention.
- La figure 2 est une vue de face sans le capotage, et avec le tenon de l'arbre mené en coupe.

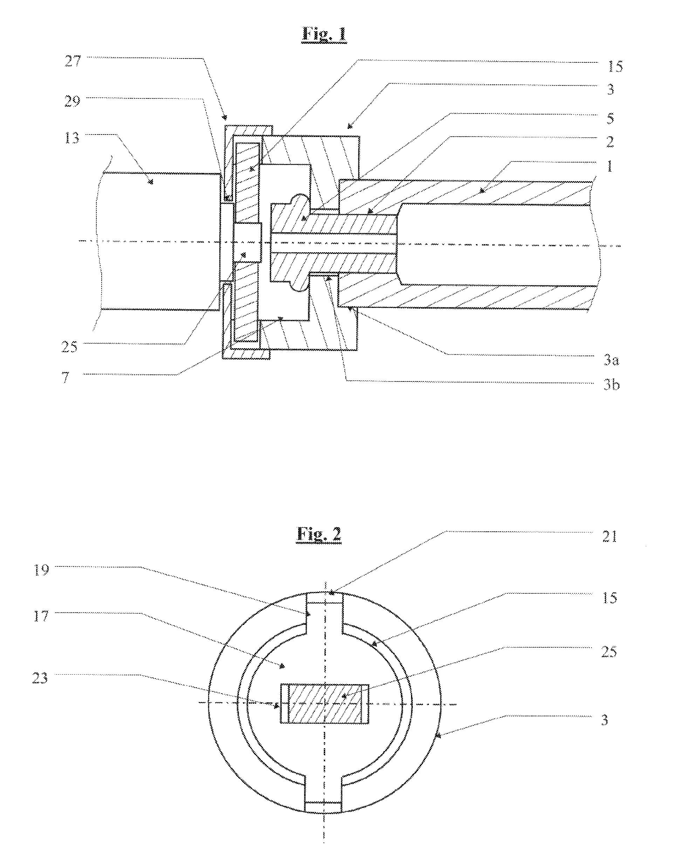

En se référant aux figures 1 et 2, l'invention comporte un arbre menant 1, par exemple un arbre à cames de moteur à combustion interne, et un arbre mené 13, par exemple un arbre de pompe à injection de moteur à combustion interne. L'arbre menant 1 est un arbre creux dans lequel se trouve de l'huile sous pression alimentée par une pompe à huile d'un moteur à combustion interne non représentée. A l'une de ses extrémités, l'arbre menant 1 définit un filetage intérieur coaxial 2.

L'invention comporte aussi une cloche 3. Cette cloche 3 définit sur l'une de ses faces un avidement 3a coaxial et de forme complémentaire à l'extrémité de l'arbre menant 1. La cloche 3 définit aussi un alésage 3b coaxial à l'évidement 3a et d'un diamètre permettant le passage d'une vis 5. La cloche 3 définit sur l'autre extrémité une cavité circulaire 7 coaxial. Cette cavité circulaire 7 est destinée à recevoir un joint homocinétique 15, de type joint oldham. La cloche 3 est fixée sur l'arbre menant 1 au moyen d'une vis 5 appuyant sur le fond de la cavité circulaire 7 et serrée dans le filetage coaxial 2 de l'arbre menant 1. La cavité circulaire 7 est prévue pour contenir la tête de la vis 5. La vis 5 est percée en son centre pour permettre l'arrivée de l'huile sous pression dans la cloche 3. On peut aussi envisager de réaliser un perçage dans l'arbre menant 1 communiquant avec un perçage dans la cloche 3 pour permettre le passage de l'huile sous pression.

La cloche 3 définit également sur son extrémité côté arbre mené 13 une rainure 21 dont l'axe est perpendiculaire à de la cloche 3.

L'invention comporte également des moyens d'entraînement disposés en croix, correspondant à un joint homocinétique, et plus particulièrement à un joint oldham 15. Le joint oldham 15 comporte un noyau circulaire 17 de diamètre inférieur à celui de la cavité circulaire 7 de la cloche 3. Le joint 15 comporte également deux tenons 19 en saillie et diamétralement opposés. Ces tenons 19 sont de forme complémentaire à la rainure 21 de la cloche 3. Le joint oldham 15 est monté à l'intérieur de la cloche 3 côté arbre mené 13. Les tenons 19 sont logés dans la rainure 21. Ainsi le joint 15 peut coulisser dans la direction de la rainure 21. Le joint 15 définit aussi une lumière 23 de forme rectangulaire. Cette lumière 23 se trouve au centre du noyau 17, et est positionnée perpendiculairement à l'axe passant par les tenons 19.

La lumière 23 du joint 15 est destinée à recevoir un tenon 25 de l'arbre mené 13. Le tenon 25 de l'arbre mené 13 est disposé sur une extrémité de l'arbre mené 13 de diamètre inférieur. Le tenon 25 a une longueur inférieure a celle de la lumière 23 du joint 15, de sorte que le tenon 25 puisse coulisser dans la lumière 23, de même que les tenons 19 du joint peuvent coulisser dans la rainure 21.

L'invention comporte également un capotage 27. Ce capotage 27 a la forme d'un couvercle en tôle. Il est prévu pour être monté sur la cloche 3 par le côté arbre mené 13. Il recouvre la périphérie de la cloche 3 et la face côté arbre mené 13. Le capotage 27 est monté serré sur la cloche 3. Sa hauteur est au moins supérieure à la profondeur de la rainure 21 de la cloche 3, de sorte que le capotage 27 recouvre cette rainure 21. Le capotage 27 est percé en son centre. Le diamètre de l'orifice 29 est supérieur au diamètre de l'extrémité de a l'arbre mené 13, c'est-à-dire qu'il existe un jeu entre l'extrémité de l'arbre mené 13 et l'orifice 29 du capotage 27.

En utilisation, c'est à dire quand l'arbre menant 1 tourne et entraîne l'arbre mené 13, l'huile arrive sous pression de l'arbre menant 1 et traverse la vis 5 de fixation de la cloche 3 sur l'arbre menant 1. Le capotage 27 empêche l'huile de s'échapper du dispositif d'accouplement. Ainsi le joint oldham 15 est lubrifié sous pression. On évite donc une usure des surfaces du joint 15 en contact avec les surfaces de la cloche 3 et de l'arbre mené 13. Toutefois, le capotage 27 autorise les fuites, c'est à dire qu'il n'est pas complètement étanche. Les fuites sont canalisées par l'orifice 29 du capotage 27. Le jeu existant entre l'orifice 29 du capotage 27 et l'extrémité de l'arbre mené 13 permet à l'huile sous pression de fuir. Cependant le jeu ne doit pas être trop important, car le capotage 27 doit pourvoir réaliser son rôle de barrière afin de maintenir l'huile sous pression. dans la cavité circulaire 7 de la cloche 3. Le joint oldham 15 reste ainsi dans un bain d'huile sous pression et les surfaces en contact sont lubrifiées. Ce rôle de barrière permet aussi de pallier au phénomène de centrifugation de l'huile au niveau de la rainure 21.

## Revendications

1. Dispositif d'accouplement de deux arbres en rotation comportant un arbre menant (1) muni à l'une de ses extrémités d'une cloche (3) définissant une cavité circulaire (7), un moyen amenant, l'huile sous pression de l'intérieur de l'arbre menant vers l'intérieur de la cloche (3), un arbre mené (13), et des moyens d'entraînement comportant un joint homocinétique (15) disposé dans la cavité circulaire (7) de la cloche (3), **caractérisé en ce que** le dispositif d'accouplement comporte un capotage (27) monté sur la cloche (3) et la coiffant sur sa périphérie et sa face côté arbre mené (13), et définissant un orifice (29) de passage de l'arbre mené (13).

2. Dispositif d'accouplement de deux arbres en rotation selon la revendication 1, **caractérisé en ce qu'**il existe un jeu entre l'extrémité de l'arbre mené (13) et l'orifice (29) du capotage (27), le jeu étant déterminé de façon à autoriser les fuites.

3. Dispositif d'accouplement de deux arbres en rotation selon la revendication 1 ou 2, **caractérisé en ce que** l'arbre menant (1) est un arbre à cames.

4. Dispositif d'accouplement de deux arbres en rotation selon l'une quelconque des revendications précédentes, **caractérisé en ce que** l'arbre mené (13) est un arbre de pompe d'injection.

5. Dispositif d'accouplement de deux arbres en rotation. selon l'une quelconque des revendications précédentes, **caractérisé en ce que** le dispositif comporte une vis (5) de fixation de la cloche (3) sur l'arbre menant (1) percée en son centre.

6. Dispositif d'accouplement de deux arbres en rotation selon l'une quelconque des revendications précédentes, **caractérisé en ce que** le moyen amenant l'huile sous pression de l'intérieur de l'arbre menant (1) vers la cavité circulaire (7) de la cloche (3) consiste en un perçage dans l'arbre menant (1) communiquant avec un perçage dans la cloche (3).
